# EUROPÄISCHE PATENTSCHRIFT

(11) **EP 2 780 130 B1**
(45) Veröffentlichungstag und Bekanntmachung des Hinweises auf die Patenterteilung: **10.02.2016**
(21) Anmeldenummer: 12783561.9
(22) Anmeldetag: 30.10.2012
(51) Int. Cl.: B23K 26/00, B61D 17/04

(54) **VERFAHREN ZUR HERSTELLUNG EINER AUSSENHAUT EINER SCHIENENFAHRZEUGGROSSKOMPONENTE**
METHOD FOR MANUFACTURING A SKIN FOR A LARGE COMPONENT OF A RAIL VEHICLE
PROCÉDÉ DE FABRICATION D'UNE PEAU EXTERNE POUR UNE GRANDE PIÈCE DE VÉHICULE FERROVIAIRE

(30) Priorität: 15.11.2011 AT 16902011
(43) Veröffentlichungstag der Anmeldung: 24.09.2014
(73) Patentinhaber: Siemens AG Österreich, 1210 Wien (AT)
(72) Erfinder: MAYER, Wilhelm, A-2230 Gänserndorf (AT)
(74) Vertreter: Maier, Daniel Oliver
(86) Internationale Anmeldenummer: PCT/EP2012/071454
(87) Internationale Veröffentlichungsnummer: WO 2013/072181

(56) Entgegenhaltungen:
- DE-A1-102010 014 962
- JP-A- 2006 051 546

## Beschreibung

### Technisches Gebiet

Die Erfindung betrifft ein Verfahren zur Herstellung einer Außenhaut einer Schienenfahrzeuggroßkomponente in Differentialbauweise und eine Schienenfahrzeuggroßkomponente.

### Stand der Technik

Schienenfahrzeuge, insbesondere Passagierfahrzeuge werden heute meistens als selbsttragende Metallkonstruktionen hergestellt. Dabei wird ein Fahrzeugkasten aus einem Untergestell, Seitenwänden, Stirnwänden und einem Dach aufgebaut. Diese Bauteile, auch Großkomponenten genannt, werden jeweils getrennt voneinander hergestellt und zu einem gesamten Fahrzeug zusammengestellt. Dabei ist es üblich in den Wänden und im Dach Längs- und Querträger vorzusehen, (sogenannte Säulen und Spriegel, meist mit Z-förmigen Querschnitt) welche mit einer Außenhaut aus Blech beplankt werden. Auch das Dach wird gewöhnlich nach diesem Prinzip aufgebaut, wobei ein Schienenfahrzeugdach sehr häufig eine gewölbte Form aufweist und deshalb teilweise leicht abweichende Konstruktionen vorzusehen sind. Diese Bauweise wird Differentialbauweise genannt bei der die verhältnismäßig einfach gestalteten Einzelteile additiv durch eine Fügetechnologie miteinander verbunden werden. Als Fügetechnik wird gemäß dem Stand der Technik praktisch ausnahmslos Schweißen eingesetzt. Bei Schweißverbindungen kann es allerdings durch die Wärmeeinbringung zu einem Verzug der Bauteile kommen, welche insbesondere an der Außenhaut nachteilig ist, da zur Erreichung einer optisch ansprechenden, planen Oberfläche weitere, aufwendige und teure Arbeitsschritte wie Richten, Kitten und Schleifen erforderlich sind. Diese Verformungen können durch den Einsatz dickerer Bleche reduziert, bzw. gänzlich verhindert werden. Durch diese Maßnahme würde das Wagengewicht allerdings ansteigen, was dem Bestreben, ein Schienenfahrzeug möglichst leicht zu bauen abträglich ist. Der Einsatz verzugsfreier Verbindungstechnik, wie z.B. Nieten ist aufgrund der nur extrem schwierig automatiersierbaren Vernietung nicht akzeptabel.

Zum technischen Umfeld wird beispielsweise auf die JP-A-2006051546 verwiesen.

### Darstellung der Erfindung

Der Erfindung liegt daher die Aufgabe zugrunde, ein Verfahren zur Herstellung einer Außenhaut einer Schienenfahrzeuggroßkomponente in Differentialbauweise anzugeben, welche auch nach dem Verschweißen der Verstärkungskonstruktion (Spriegelwand) mit der Außenhaut eine weitgehend verzugsfreie Außenhaut aufweist.

Die Aufgabe wird durch ein Verfahren mit den Merkmalen des Anspruchs 1 und durch eine Schienenfahrzeuggroßkomponente nach Anspruch 11 gelöst. Vorteilhafte Ausgestaltungen sind Gegenstand untergeordneter Ansprüche.

Dem Grundgedanken der Erfindung nach wird eine Außenhaut einer Schienenfahrzeuggroßkomponente mittels eines Verfahrens hergestellt, welches folgende Verfahrensschritte umfasst:
- 1: Trennen einer Blechtafel in 2 Teile,
- 2: Einlegen eines Blechstreifens in einen Trennspalt zwischen den beiden Teilen,
- 3: Verschweißen der Kanten der geteilten Blechtafeln und des Blechstreifens, zu einer gesamten Blechtafel,
- 4: wiederholen der Verfahrensschritte 1 bis 3 an weiteren Stellen der Blechtafel, wobei die Trennschnitte parallel zu dem ersten Trennschnitt ausgeführt werden,
- 5: wiederholen der Verfahrensschritte 1 bis 4 an weiteren Stellen der Blechtafel, wobei die Trennschnitte dabei in einer zu den vorgehenden Trennschnitten unterschiedlichen Richtung ausgeführt werden.

Dadurch ist der Vorteil erzielbar, einer gesamten Blechtafel (einer gesamten Außenhaut) an bestimmten Stellen (Trennstellen) mittels der Integration von Blechstreifen bestimmte Eigenschaften an diesen Stellen verleihen zu können. Insbesondere durch das Einschweißen von Blechstreifen größerer Dicke als die Dicke der Blechtafel kann ein Verzug beim Verschweißen der Blechtafel mit der Verstärkungskonstruktion (Spriegelwand aus Säulen und Spriegeln) verhindert, zumindest jedoch verringert werden. Eine Nachbearbeitung der mit einer solchen Außenhaut ausgestatteten Schienenfahrzeuggroßkomponente (richten, kitten, schleifen) kann daher entfallen. Dazu ist es erforderlich, die Verbindungsstellen der Außenhaut (Blechtafel) mit der Verstärkungskonstruktion an diesen Bereichen größerer Dicke anzuordnen.

Mit dem erfindungsgemäßen Verfahren gelingt es, eine Außenhaut herzustellen, welche an den Verbindungsstellen mit der Verstärkungskonstruktion eine größere Blechdicke als zwischen diesen Verbindungsstellen aufweist. Dabei ist es besonders vorteilhaft, die ursprüngliche Blechtafel mit einer Reihe von Verstärkungen (eingeschweißte Blechstreifen) jeweils parallel zu einander auszustatten, sowie eine weitere Reihe von Verstärkungen normal zu der ersten Richtung vorzusehen. Solcherart kann eine Außenhaut mit einem Gitter von Verstärkungen versehen werden, welches parallel bzw. normal zum Boden des Schienenfahrzeugs ausgerichtet ist. Diese Verstärkungen bewirken neben der Erhöhung der Steifigkeit der Außenhaut insbesondere auch eine wesentlich geringere Neigung zum Verzug der Außenhaut bei der Verschweißung mit der Verstärkungskonstruktion. Es ist auch möglich, die Verstärkungen in anderen (nicht normalen) Winkeln zueinander anzuordnen. Dies kann für Fahrzeuge vorteilhaft sein, welche keine Fenster aufweisen und deshalb die Fensteranordnung bei der Festlegung der Verstärkungsbereiche nicht berücksichtigt werden muß.

Weiters ist es vorteilhaft, als Blechstreifen ein Material mit von der Blechtafel abweichenden metallurgischen Eigenschaften einzusetzen und solcherart eine weitere Gestaltungsmöglichkeit, insbesondere verbesserte Schweißeigenschaften an den Verbindungsstellen zu erlangen.

Eine Ausführungsform der Erfindung sieht vor, die Trennschnitte jeweils parallel zueinander zu gestalten. Solcherart ist eine Blechtafel (Außenhaut) herstellbar, welche in bestimmten Abständen parallele Bereiche unterschiedlicher Materialeigenschaften, insbesondere Materialdicke aufweist.

In weiterer Fortbildung der Erfindung ist vorgesehen, die Trennschnitte in beliebigen Winkeln zueinander auszuführen und in diesen Trennspalten jeweils Blechstreifen anzuordnen.

Ein kreuzen von bereits eingeschweißten Blechstreifen mit weiteren Blechstreifen (in darauffolgenden Durchläufen der Verfahrensschritte) ist ohne weiteres möglich und führt zu einer Blechtafel mit einander kreuzenden verstärkten (bzw. verdickten) Bereichen. Dieses Kreuzen kann in beliebigen Winkel zueinander erfolgen.

Es ist besonders empfehlenswert, die in diesem Verfahren auszuführenden Trennschritte mittels Laserlicht auszuführen, da solcherart besonders genaue Schnittkanten entstehen, die für die weitere Verarbeitung gute Eigenschaften aufweisen. Insbesondere ist es empfehlenswert, die Verschweißungen der Teile der Blechtafeln mit den Belchstreifen ebenfalls mittels Laserlicht vorzunehmen, da dieses Schweißverfahren aufgrund der geringen Wärmeeinbringung in das zu verschweißende Material nur sehr geringen Verzug hervorruft.

Ein weiterer Vorteil des Einsatzes eines Laserschweißerfahrens ist die besonders gute Automatisierbarkeit, da Laserschneid- bzw. Schweißmaschinen ausschließlich automatisiert arbeiten und die Trenn- und Schweißvorgänge selbstätig ausführen können.

Der Einsatz eines Laserschweißverfahrens bedingt sehr geringe Schweißspalte (typ. 0,1mm), welche mit konventionellen Trennmethoden nicht gewährleistet werden können. Weiters kann es erforderlich sein, die geteilten Blechtafeln und die Blechstreifen überlappend anzuordnen und mit zwei weiteren Trennvorgängen gemeinsam zu trennen. Diese Trennvorgänge erfolgen im Bereich der Überlappung, solcherart kann ein Schweißspalt von den erforderlichen geringen Abmessungen sichergestellt werden.

Eine bevorzugte Ausführungsform der Erfindung sieht den Einsatz von profilgewalzten Blechen als Ausgangsmaterial vor. Diese Bleche umfassen bereits einen durch den Walzvorgang hergestellen Bereich mit größerer Dicke. Werden profilgewalzte Bleche parallel zu einer größeren Blechtafel zusammengesetzt, so ist eine Blechtafel mit parallel angeordneten verstärkten Bereichen herstellbar. Durch darauffolgende Anwendung der erfindungsgemäßen Verfahrensschritt, beispielsweise durch Einschweissen verstärkender Blechstreifen normal zu den verstärkten Bereichen der profilgewalzten Bleche kann eine verstärkte Außenhaut hergestellt werden. Diese Ausführungsform bietet den Vorteil, Arbeitsschritte einsparen zu können, wodurch die Außenhaut schneller herstellbar ist.

Als Material für die Außenhaut sind alle schweißbaren Metalle, insbesondere Stahl und Aluminium geeignet.

Eine mit gegenständlichen Verfahren hergestellte Außenhaut kann für alle Schienenfahrzeuggroßkomponenten in Differentialbauweise, wie Seitenwände, Dach oder Stirnwände eingesetzt werden.

Ein weiterer Vorteil gegenständlicher Erfindung ist es, an beliebigen Stellen der Außenhaut Verstärkungen anordnen zu können, auch wenn die an diesen Stellen erhöhte Dicke der Außenhaut nicht zur Verbindung mit der Verstärkungskonstruktion eingesetzt wird. Dies ist insbesondere an Tür- und Fensterumrahmungen vorteilhaft, da solcherart ein Reißen der Außenhaut an den mechanisch höher beanspruchten Ecken der Tür- und Fensteröffnungen verhindert wird.

### Kurzbeschreibung der Zeichnungen

Es zeigen beispielhaft:
- **Fig.1**: Schienenfahrzeuggroßkomponente an einer Verbindungsstelle Außenhaut - Verstärkungskonstruktion.
- **Fig.2**: Schienenfahrzeuggroßkomponente an einer Verbindungsstelle Außenhaut - Verstärkungskonstruktion, mit Verzug.
- **Fig.3**: Außenhaut - Erster Verarbeitungsschritt.
- **Fig.4**: Außenhaut - Zweiter Verarbeitungsschritt.
- **Fig.5**: Außenhaut - Zweiter Verarbeitungsschritt, Seitenansicht.
- **Fig.6**: Außenhaut - Dritter Verarbeitungsschritt.
- **Fig.7**: Schienenfahrzeuggroßkomponente an einer Verbindungsstelle einer erfindungsgemäßen Außenhaut mit einer Verstärkungskonstruktion.
- **Fig.8**: Außenhaut mit horizontaler und vertikaler Verstärkung Erster Verarbeitungsschritt.
- **Fig.9**: Außenhaut mit horizontaler und vertikaler Verstärkung Zweiter Verarbeitungsschritt.
- **Fig.10**: Außenhaut mit horizontaler und vertikaler Verstärkung Dritter Verarbeitungsschritt.
- **Fig.11**: Außenhaut mit Fensteröffnung - Erster Verarbeitungsschritt.
- **Fig.12**: Außenhaut mit Fensteröffnung - Zweiter Verarbeitungsschritt.
- **Fig.13**: Außenhaut mit Fensteröffnung - Dritter Verarbeitungsschritt.
- **Fig.14**: Außenhaut mit Fensteröffnung - Vierter Verarbeitungsschritt.
- **Fig.15**: Außenhaut mit konstanter Blechdicke am Umfang.

### Ausführung der Erfindung

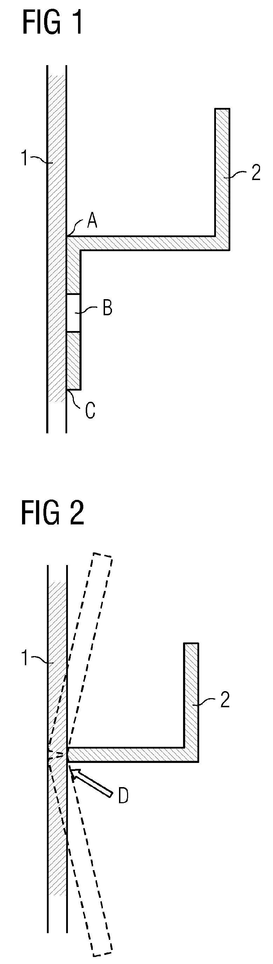

**Fig.1** zeigt beispielhaft und schematisch eine Schienenfahrzeuggroßkomponente an einer Verbindungsstelle Außenhaut - Verstärkungskonstruktion. Es ist ein Detail einer Schienenfahrzeuggroßkomponente an einer Verbindungsstelle einer Außenhaut 1 mit einer Verstärkungskonstruktion 2 dargestellt. Die Außenhaut 1 ist aus Blech gefertigt und mit einem Z-förmigen Profil, z.B. einer Säule oder eines Spriegels einer Verstärkungskonstruktion 2 verschweißt. Diese Verschweißung erfolgt gebräuchlicherweise an einer oder mehreren der Schweißpositionen A, B oder C. Zur Verschweißung an der Position B ist die Verstärkungskonstruktion 2 an der Position B mit einer Ausnehmung ausgeführt. Diese Ausführungsform ist für die Verschweißung mit herkömmlichen Schweißverfahren geeignet.

**Fig.2** zeigt beispielhaft und schematisch eine Schienenfahrzeuggroßkomponente an einer Verbindungsstelle Außenhaut - Verstärkungskonstruktion, mit Verzug. Es ist eine Ausführungsform dargestellt, welche für die Verbindung der Außenhaut 1 mit der Verstärkungskonstruktion 2 mittels Laserschweißung D geeignet ist. Dabei ist der Spriegel, bzw. die Säule der Verstärkungskonstruktion 2 L-förmig ausgebildet und ein Schenkel dieses L-förmigen Bauteils setzt stumpf auf die Innenseite der Außenhaut 1 auf. Aufgrund der geringen Dicke der Außenhaut 1 kann es dabei zu Verzug der Außenhaut 1 kommen, in Fig.1 strichliert dargestellt.

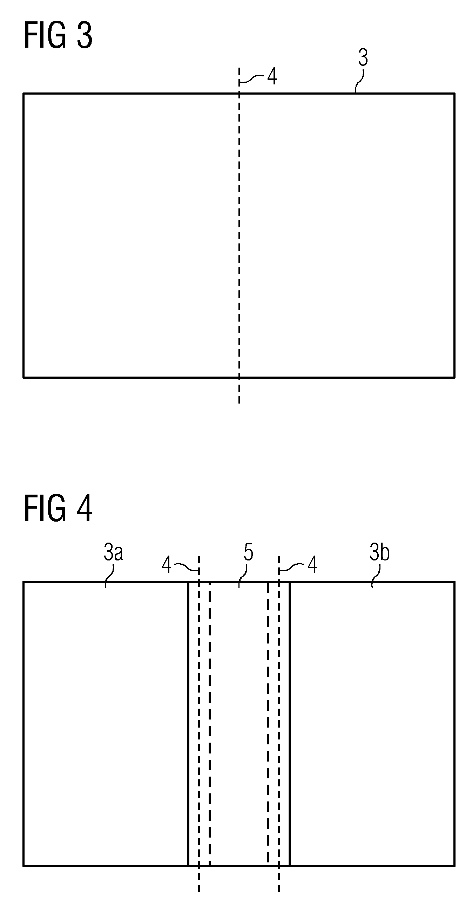

**Fig.3** zeigt beispielhaft und schematisch eine Außenhaut - Erster Verarbeitungsschritt. In einem ersten Verarbeitungsschritt wird eine Blechtafel 3 mittels eines Trennschnitts 4 geteilt.

**Fig.4** zeigt beispielhaft und schematisch eine Außenhaut - Zweiter Verarbeitungsschritt. In einem zweiten Verarbeitungsschritt werden die beiden Blechtafelteile 3a, 3b voneinander in einem bestimmen Abstand angeordnet und ein Blechstreifen 5 über diesen Trennspalt gelegt. Der Blechstreifen 5 überlappt dabei die Kanten der Blechtafelteile 3a, 3b. Daraufhin erfolgen zwei weitere Trennschnitte 4 in jedem der beiden Überlappungsbereiche. Dabei werden sowohl der Blechstreifen 4 als auch die Blechtafelteile 3a, 3b gleichzeitig geschnitten. Solcherart kann ein genau passender Schweißpalt für den darauffolgenden Verarbeitungsschritt sichergestellt werden.

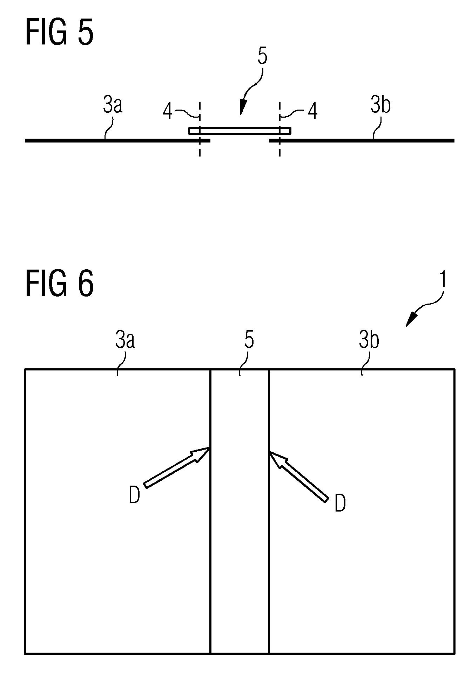

**Fig.5** zeigt beispielhaft und schematisch eine Außenhaut - Zweiter Verarbeitungsschritt, Seitenansicht. Es ist die Anordnung der Bauteile aus Fig. 4 in einer Seitenansicht gezeigt. Insbesondere die Überlappung der Blechtafelteile 3a, 3b mit dem Blechstreifen 5 ist dabei ersichtlich. Weiters ist die größere Dicke des Blechstreifens 5 erkennbar.

**Fig.6** zeigt beispielhaft und schematisch eine Außenhaut - Dritter Verarbeitungsschritt. In einem dritten Verarbeitungsschritt werden, nach dem Entfernen der Abfälle die im zweiten Verarbeitungsschritt gemeinsam getrennten Bauteile Blechstreifen 5 und Blechtafelteile 3a, 3b miteinander verschweißt D und bilden eine Außenhaut 1. Diese Außenhaut 1 weist die ursprüngliche Dicke der Blechtafel 3 auf, außer in dem Bereich, in welchen der Blechstreifen 5 eingesetzt wurde.

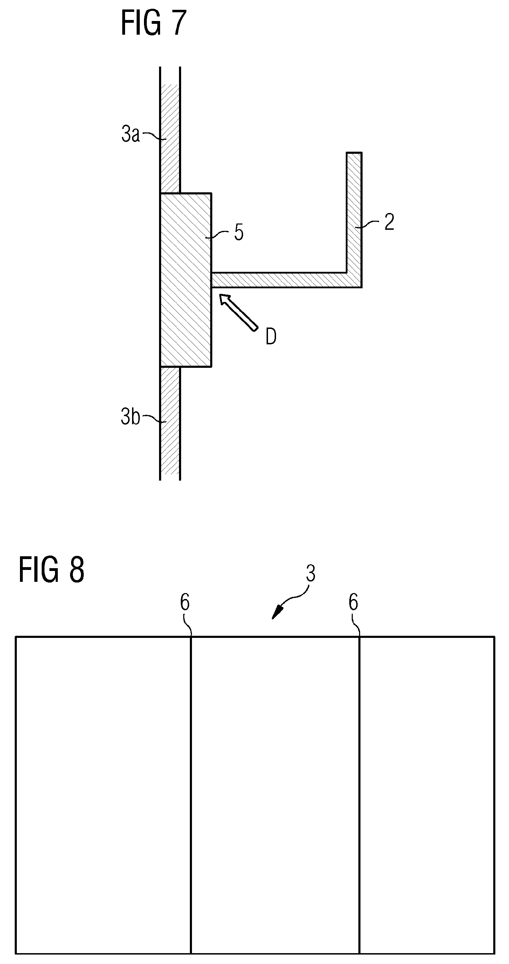

**Fig.7** zeigt beispielhaft und schematisch eine Schienenfahrzeuggroßkomponente an einer Verbindungsstelle einer erfindungsgemäßen Außenhaut mit einer Verstärkungskonstruktion. Es ist eine Verbindungsstelle, ähnlich wie in Fig.2 dargestellt, wobei die Außenhaut 1 nach dem erfindungsgemäßen Verfahren hergestellt wurde. Die Außenhaut 1 weist im Bereich der Verbindungsstelle mit der Verstärkungskonstruktion 2 durch das Einsetzen des Blechstreifens 5 eine größere Dicke auf als die benachbarten Blechtafelteile 3a, 3b. Die Laserschweißung D führt deshalb zu einem sehr geringen Verzug der Außenhaut 1.

Die Fig.8 bis 10 zeigen die Herstellungsschritte einer Außenhaut mit horizontaler und vertikaler Verstärkung.

**Fig.8** zeigt beispielhaft und schematisch eine Außenhaut mit horizontaler und vertikaler Verstärkung - Erster Verarbeitungsschritt. Dieses Ausführungsbeispiel zeigt die Verarbeitung großer Blechtafeln 3, wie sie bei Außenhäuten von Schienenfahrzeugen erforderlich sind. Die dabei gebräuchlichen Abmessungen der Blechtafeln 3 sind einstückig nicht, bzw. nur extrem aufwendig herstellbar, sodass die Blechtafel 3 aus einzelnen Tafeln mittels Verbindungsschweißungen 6 zusammengesetzt sind. Eine solche, zusammengesetzte Blechtafel 3 bildet das Ausgangsmaterial für die folgenden Verfahrensschritte.

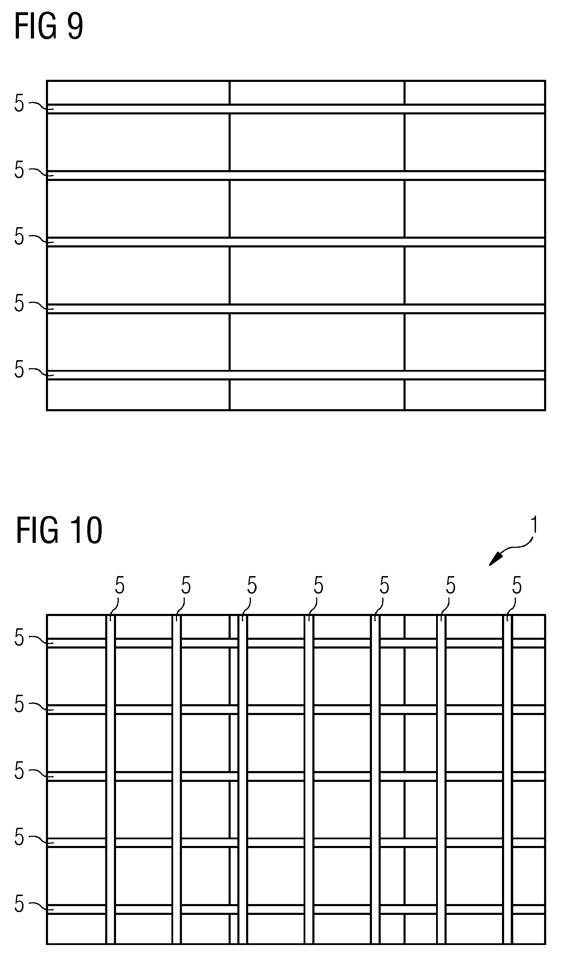

**Fig.9** zeigt beispielhaft und schematisch eine Außenhaut mit horizontaler und vertikaler Verstärkung - Zweiter Verarbeitungsschritt. In einem zweiten Verfahrensschritt werden durch mehrfache Wiederholung der Verfahrensschritte aus Fig.3 bis Fig.6 mehrere Blechstreifen 5 in eine Blechtafel eingesetzt. In dem gezeigten Ausführungsbeispiel sind fünf Blechstreifen 5 eingesetzt, die Abstände der Blechstreifen 5 zueinander sind beliebig wählbar, es ist keinerlei Raster erforderlich.

**Fig.10** zeigt beispielhaft und schematisch eine Außenhaut mit horizontaler und vertikaler Verstärkung - Dritter Verarbeitungsschritt. In diesem dritten Verfahrenschritt werden Blechstreifen 5 durch mehrfache Wiederholung der Verfahrensschritte aus Fig.3 bis Fig.6 senkrecht eingesetzt. In dem gezeigten Ausführungsbeispiel sind die Blechstreifen 4 waagrecht und senkrecht angeordnet, da dies eine vorteilhafte Ausführung für Schienenfahrzeuggroßkomponenten ist, es ist jedoch möglich, die Blechstreifen 5 in jedem beliebigen Winkel zu den Außenkanten der Blechtafel einzusetzen, die Blechtafel kann auch beliebige Umrißformen aufweisen.

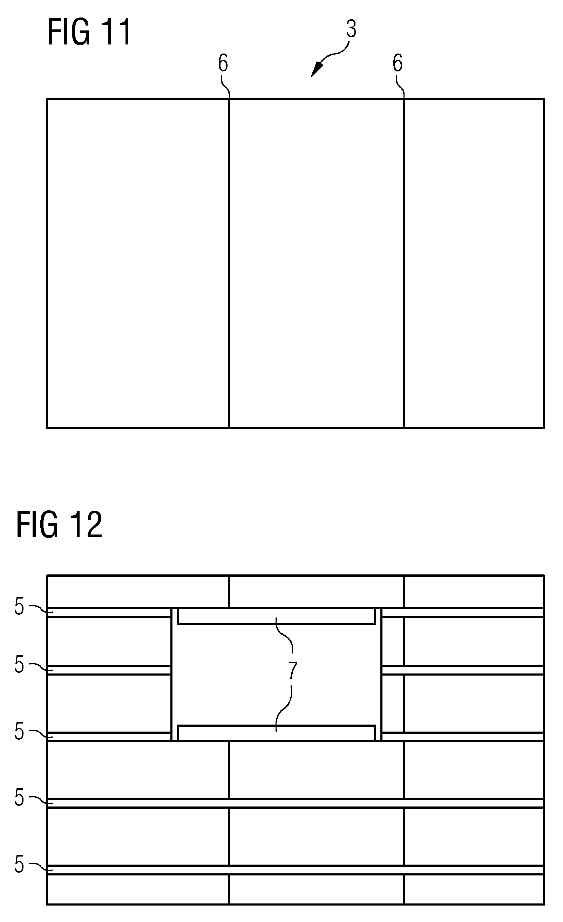

Die Fig.11 bis 14 zeigen die Herstellungsschritte einer Außenhaut mit horizontaler und vertikaler Verstärkung mit Fensteröffnung.

**Fig.11** zeigt beispielhaft und schematisch eine Außenhaut mit Fensteröffnung - Erster Verarbeitungsschritt. Der erste Verarbeitungsschritt entspricht dem in Fig.8 gezeigtem Verarbeitungsschritt.

**Fig.12** zeigt beispielhaft und schematisch eine Außenhaut mit Fensteröffnung - Zweiter Verarbeitungsschritt. In diesem Verfahrensschritt werden Blechstreifen 5 gemäß dem obig beschriebenen Verfahren eingesetzt. Im Bereich der vorgesehenen Fensteröffnung wird eine Ausnehmung aus der Blechtafel ausgeschnitten und Rahmenverstärkungen 7 analog dem Einschweißen der Blechstreifen 5 eingeschweißt.

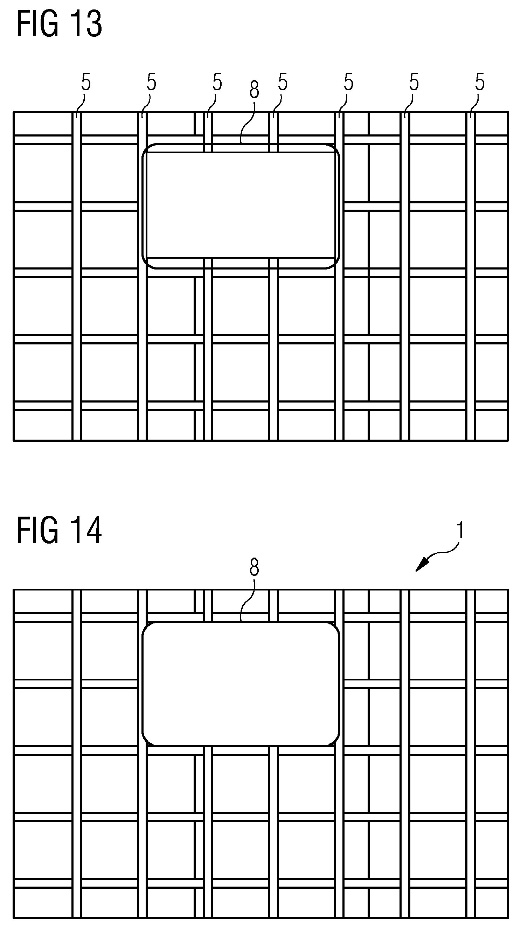

**Fig.13** zeigt beispielhaft und schematisch eine Außenhaut mit Fensteröffnung - Dritter Verarbeitungsschritt. In diesem dritten Verfahrensschritt werden Blechstreifen 5 senkrecht eingesetzt. Dies erfolgt ebenfalls gemäß dem obig beschriebenen Verfahren. Dabei sind senkrechte Blechstreifen 5 so angeordnet, dass sie im Bereich der Fensteröffnung einen senkrechten Verstärkungsbereich bilden, dadurch ist in dem gezeigten Ausführungsbeispiel keine zusätzliche senkrechte Rahmenverstärkung erforderlich. Eine solche kann jedoch, ähnlich wie die waagrechte Rahmenverstärkung 7 vorgesehen werden. Der zukünftige Fensterausschnitt 8 ist gezeigt, wobei die gesamte Umrißlinie des Fensterausschnitts 8 in verstärkten Bereichen angeordnet ist.

**Fig.14** zeigt beispielhaft und schematisch eine Außenhaut mit Fensteröffnung - Vierter Verarbeitungsschritt. In diesem Verarbeitungsschritt erfolgt das Ausschneiden des Fensterausschnitts 8.

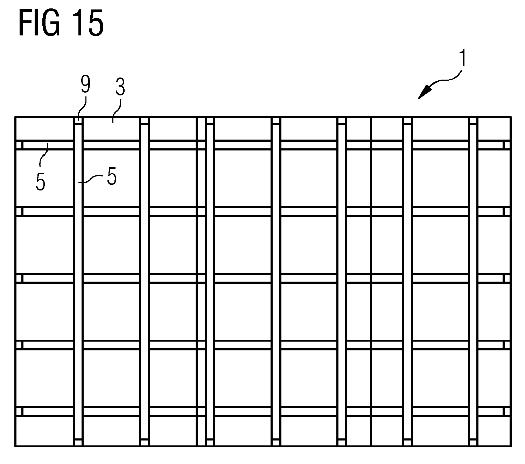

**Fig.15** zeigt beispielhaft und schematisch eine Außenhaut mit konstanter Blechdicke am Umfang. Für Anwendungen, bei welchen es für die weitere Verarbeitung der Außenhaut 1 vorteilhaft ist, an der Umfanglinie der Außenhaut 1 eine konstante Blechdicke vorzusehen, können eingesetzte Blechstreifen 5 am Rand der Außenhaut 1 durch zweite Blechstreifen 9 ergänzt werden. Diese zweiten Blechstreifen 9 weisen dieselbe Dicke wie die Blechtafel 3 auf. Dadurch kann das Verbinden der Außenhaut 1 mit weiteren Komponenten eines Schienenfahrzeugs vereinfacht werden, da bei diesen Schweißvorgängen dadurch keine Berücksichtigung unterschiedlicher Blechdicken erforderlich ist.

### Liste der Bezeichnungen

- 1: Außenhaut
- 2: Verstärkungskonstruktion
- A, B, C: Schweißpositionen
- D: Laserschweißung
- 3: Blechtafel
- 3a: erster Blechtafelteil
- 3b: zweiter Blechtafelteil
- 4: Trennschnitt
- 5: Blechstreifen
- 6: Verbindungsschweißung
- 7: Rahmenverstärkung
- 8: Fensterausschnitt
- 9: zweite Blechstreifen

## Patentansprüche

1. Verfahren zur Herstellung einer Außenhaut (1) einer Schienenfahrzeuggroßkomponente in Differentialbauweise mit folgenden Verfahrensschritten:
1 Trennen einer Blechtafel (3) in 2 Teile (3a, 3b)
2 Einlegen eines Blechstreifens (5) in einen Trennspalt zwischen den beiden Teilen (3a, 3b)
3 Verschweißen der Kanten der geteilten Blechtafeln (3a, 3b) und des Blechstreifens (5) zu einer gesamten Blechtafel,
4 wiederholen der Verfahrensschritte 1 bis 3 an weiteren Stellen der Blechtafel, wobei die Trennschnitte parallel zu dem ersten Trennschnitt ausgeführt werden,
5 wiederholen der Verfahrensschritte 1 bis 4 an weiteren Stellen der Blechtafel, wobei die Trennschnitte dabei in einer zu den vorgehenden Trennschnitten unterschiedlichen Richtung ausgeführt werden.

2. Verfahren zur Herstellung einer Außenhaut (1) einer Schienenfahrzeugkomponente in Differentialbauweise nach Anspruch 1, **dadurch gekennzeichnet, dass** die Trennschnitte 1 bis 4 normal zu den Trennschnitten des Verfahrensschritts 5 ausgerichtet sind.

3. Verfahren zur Herstellung einer Außenhaut (1) einer Schienenfahrzeugkomponente in Differentialbauweise nach Anspruch 1 oder 2, **dadurch gekennzeichnet, dass** der Blechstreifen (5) so in den Trennspalt zwischen den beiden Teilen (3a, 3b) eingelegt wird, dass die Kanten des Blechstreifens (5) die Kanten der geteilten Blechtafel (3a, 3b) überlappen und vor dem verschweißen gemeinsam geschnitten werden.

4. Verfahren zur Herstellung einer Außenhaut (1) einer Schienenfahrzeugkomponente in Differentialbauweise nach einem der Ansprüche 1 bis 4, **dadurch gekennzeichnet, dass** die ursprüngliche Blechtafel (3) aus mehreren Teilblechtafeln zusammengesetzt ist.

5. Verfahren zur Herstellung einer Außenhaut (1) einer Schienenfahrzeugkomponente in Differentialbauweise nach Anspruch 1 bis 4, **dadurch gekennzeichnet, dass** die ursprüngliche Blechtafel (3) aus mehreren profilgewalzten Blechtafeln zusammengesetzt ist und nur die Verfahrensschritte 1 bis 4 ausgeführt werden.

6. Verfahren zur Herstellung einer Außenhaut (1) einer Schienenfahrzeuggroßkomponente in Differentialbauweise nach Anspruch 1 bis 5, **dadurch gekennzeichnet, dass** die Trenn- und Schweißverfahrensschritte mittels Laserlicht ausgeführt werden.

7. Verfahren zur Herstellung einer Außenhaut (1) einer Schienenfahrzeuggroßkomponente in Differentialbauweise nach Anspruch 1 bis 6, **dadurch gekennzeichnet, dass** die Blechstreifen (5) eine von der Blechtafel (3) abweichende Dicke aufweisen.

8. Verfahren zur Herstellung einer Außenhaut (1) einer Schienenfahrzeuggroßkomponente in Differentialbauweise nach einem der Ansprüche 1 bis 7, **dadurch gekennzeichnet, dass** die Blechstreifen (5) dicker sind als die Blechtafel (3).

9. Verfahren zur Herstellung einer Außenhaut (1) einer Schienenfahrzeuggroßkomponente in Differentialbauweise nach einem der Ansprüche 1 bis 8, **dadurch gekennzeichnet, dass** die Blechstreifen (5) entlang ihrer Längsrichtung eine variable Dicke aufweisen.

10. Verfahren zur Herstellung einer Außenhaut (1) einer Schienenfahrzeuggroßkomponente in Differentialbauweise nach einem der Ansprüche 1 bis 9, **dadurch gekennzeichnet, dass** in den Trennspalt zwischen den beiden Teilen (3a, 3b) sowohl Blechstreifen (5) als auch zweite Blechstreifen (9) eingelegt und mit den beiden Teilen (3a, 3b) verschweißt werden.

11. Schienenfahrzeuggroßkomponente in Differentialbauweise, umfassend eine Außenhaut (1) und eine mit der Außenhaut verschweißte Verstärkungskonstruktion (2), **dadurch gekennzeichnet, dass** die Außenhaut (1) nach einem Verfahren gemäß einem der Ansprüche 1 bis 8 hergestellt ist.

12. Schienenfahrzeuggroßkomponente in Differentialbauweise, nach Anspruch 11, **dadurch gekennzeichnet, dass** die Blechstreifen (5) in der Außenhaut (1) an den Verbindungsstellen mit der Verstärkungskonstruktion (2) angeordnet sind.

13. Schienenfahrzeuggroßkomponente in Differentialbauweise, nach Anspruch 11 oder 12, **dadurch gekennzeichnet, dass** die Blechstreifen (5) in der Außenhaut (1) im Bereich eines Tür- oder Fensterausschnitts so angeordnet sind, dass sie einen Rahmen um den Tür- oder Fensterausschnitt bilden.

14. Schienenfahrzeug, umfassend eine Schienenfahrzeuggroßkomponente nach einem der Ansprüche 11 bis 13.

## Claims

1. Method for manufacturing a skin (1) of a large component of a rail vehicle using differential construction, having the following method steps:
1 Separate a sheet metal panel (3) into two parts (3a, 3b),
2 Insert a sheet metal strip (5) into a separation gap between the two parts (3a, 3b),
3 Weld the edges of the separated sheet metal panels (3a, 3b) and of the sheet metal strip (5) to form an entire sheet metal panel,
4 Repeat the method steps 1 to 3 at other locations of the sheet metal panel, wherein the separation cuts are made parallel to the first separation cut,
5 Repeat the method steps 1 to 4 at other locations of the sheet metal panel, wherein the separation cuts are in this case made in a direction different to that of the previous separation cuts.

2. Method for manufacturing a skin (1) of a rail vehicle component using differential construction according to claim 1, **characterised in that** the separation cuts 1 to 4 are oriented perpendicular to the separation cuts of method step 5.

3. Method for manufacturing a skin (1) of a rail vehicle component using differential construction according to claim 1 or 2, **characterised in that** the sheet metal strip (5) is inserted into the separation gap between the two parts (3a, 3b) such that the edges of the sheet metal strip (5) overlap the edges of the separated sheet metal panel (3a, 3b) and are cut together before being welded.

4. Method for manufacturing a skin (1) of a rail vehicle component using differential construction according to one of claims 1 to 4, **characterised in that** the original sheet metal panel (3) is composed of multiple partial sheet metal panels.

5. Method for manufacturing a skin (1) of a rail vehicle component using differential construction according to claim 1 to 4, **characterised in that** the original sheet metal panel (3) is composed of multiple profile-rolled sheet metal panels and only the method steps 1 to 4 are performed.

6. Method for manufacturing a skin (1) of a large component of a rail vehicle using differential construction according to claim 1 to 5, **characterised in that** the separation and welding method steps are performed by means of laser light.

7. Method for manufacturing a skin (1) of a large component of a rail vehicle using differential construction according to claim 1 to 6, **characterised in that** the sheet metal strips (5) have a thickness different from that of the sheet metal panel (3).

8. Method for manufacturing a skin (1) of a large component of a rail vehicle using differential construction according to one of claims 1 to 7, **characterised in that** the sheet metal strips (5) are thicker than the sheet metal panel (3).

9. Method for manufacturing a skin (1) of a large component of a rail vehicle using differential construction according to one of claims 1 to 8, **characterised in that** the sheet metal strips (5) have a variable thickness along their longitudinal direction.

10. Method for manufacturing a skin (1) of a large component of a rail vehicle using differential construction according to one of claims 1 to 9, **characterised in that** sheet metal strips (5) and second sheet metal strips (9) are both inserted into the separation gap between the two parts (3a, 3b) and are welded to the two parts (3a, 3b).

11. Large component of a rail vehicle using differential construction, comprising a skin (1) and a reinforcement structure (2) welded to the skin, **characterised in that** the skin (1) is manufactured in accordance with a method according to one of claims 1 to 8.

12. Large component of a rail vehicle using differential construction, according to claim 11, **characterised in that** the sheet metal strips (5) in the skin (1) are arranged at the joints with the reinforcement structure (2).

13. Large component of a rail vehicle using differential construction, according to claim 11 or 12, **characterised in that** the sheet metal strips (5) in the skin (1) are arranged in the region of a door opening or window opening such that they form a frame around the door opening or window opening.

14. Rail vehicle comprising a large component of a rail vehicle according to one of claims 11 to 13.

## Revendications

1. Procédé de fabrication d'une peau externe (1) d'un gros composant de véhicule sur rails dans un mode de construction différentiel avec les étapes de procédé suivantes :
1 séparation d'une feuille de tôle (3) en 2 parties (3a, 3b)
2 mise en place d'un ruban de tôle (5) dans un interstice de séparation entre les deux parties (3a, 3b)
3 soudure des bords des feuilles de tôle divisées (3a, 3b) et du ruban de tôle (5) en une feuille de tôle totale,
4 répétition des étapes de procédé 1 à 3 au niveau d'autres points de la feuille de tôle, les coupes de séparation étant réalisées parallèlement à la première coupe de séparation,
5 répétition des étapes de procédé 1 à 4 au niveau d'autres points de la feuille de tôle, les coupes de séparation étant à cet effet réalisées dans une direction différente de la coupe de séparation précédente.

2. Procédé de fabrication d'une peau externe (1) d'un composant de véhicule sur rails dans un mode de construction différentiel selon la revendication 1, **caractérisé en ce que** les coupes de séparation 1 à 4 sont orientées normalement par rapport aux coupes de séparation de l'étape de procédé 5.

3. Procédé de fabrication d'une peau externe (1) d'un composant de véhicule sur rails dans un mode de construction différentiel selon la revendication 1 ou 2, **caractérisé en ce que** le ruban de tôle (5) est mis en place dans l'interstice de séparation entre les deux parties (3a, 3b) de sorte que les bords du ruban de tôle (5) chevauchent les bords de la feuille de tôle divisée (3a, 3b) et sont découpés conjointement avant la soudure.

4. Procédé de fabrication d'une peau externe (1) d'un composant de véhicule sur rails dans un mode de construction différentiel selon l'une des revendications 1 à 4, **caractérisé en ce que** la feuille de tôle initiale (3) est assemblée à partir de plusieurs parties de feuilles de tôle.

5. Procédé de fabrication d'une peau externe (1) d'un composant de véhicule sur rails dans un mode de construction différentiel selon les revendications 1 à 4, **caractérisé en ce que** la feuille de tôle initiale (3) est assemblée à partir de plusieurs feuilles de tôle laminées et seules les étapes de procédé 1 à 4 sont réalisées.

6. Procédé de fabrication d'une peau externe (1) d'un gros composant de véhicule sur rails dans un mode de construction différentiel selon les revendications 1 à 5, **caractérisé en ce que** les étapes de procédé de séparation et de soudure sont réalisées au moyen d'une lumière laser.

7. Procédé de fabrication d'une peau externe (1) d'un gros composant de véhicule sur rails dans un mode de construction différentiel selon les revendications 1 à 6, **caractérisé en ce que** les rubans de tôle (5) présentent une épaisseur différant de la feuille de tôle (3).

8. Procédé de fabrication d'une peau externe (1) d'un gros composant de véhicule sur rails dans un mode de construction différentiel selon l'une des revendications 1 à 7, **caractérisé en ce que** les rubans de tôle (5) sont plus épais que les feuilles de tôle (3).

9. Procédé de fabrication d'une peau externe (1) d'un gros composant de véhicule sur rails dans un mode de construction différentiel selon l'une des revendications 1 à 8, **caractérisé en ce que** les rubans de tôle (5) présentent une épaisseur variable le long de leur direction longitudinale.

10. Procédé de fabrication d'une peau externe (1) d'un gros composant de véhicule sur rails dans un mode de construction différentiel selon l'une des revendications 1 à 9, **caractérisé en ce que** dans l'interstice de séparation entre les deux parties (3a, 3b) aussi bien des rubans de tôle (5) que des deuxièmes rubans de tôle (9) sont mis en place et sont soudés aux deux parties (3a, 3b).

11. Gros composant de véhicule sur rails dans un mode de construction différentiel, comprenant une peau externe (1) et une construction de renforcement (2) soudée à la peau externe, **caractérisé en ce que** la peau externe (1) est fabriquée d'après un procédé selon l'une des revendications 1 à 8.

12. Gros composant de véhicule sur rails dans un mode de construction différentiel selon la revendication 11, **caractérisé en ce que** les rubans de tôle (5) sont disposés dans la peau externe (1) au niveau des points de raccordement avec la construction de renforcement (2).

13. Gros composant de véhicule sur rails dans un mode de construction différentiel selon la revendication 11 ou 12, **caractérisé en ce que** les rubans de tôle (5) sont disposés dans la peau externe (1) dans la zone d'une découpe de porte ou de fenêtre de sorte qu'ils forment un cadre autour de la découpe de porte ou de fenêtre.

14. Véhicule sur rails, comprenant un gros composant de véhicule sur rails selon l'une des revendications 11 à 13.
